# EUROPEAN PATENT APPLICATION

(11) **EP 2 061 169 A2**
(43) Date of publication of application: **20.05.2009**
(21) Application number: 08253341.5
(22) Date of filing: 15.10.2008
(51) Int. Cl.: H04H 60/39

(54) **Schedule managing apparatus and method in mobile terminal**

(30) Priority: 16.11.2007 KR 20070117527
(71) Applicant: LG Electronics Inc., Yongdungpo-Gu Seoul (KR)
(72) Inventor: Kim, Seong-Nam, Seoul (KR)
(74) Representative: Beresford, Keith Denis Lewis

(57) **Abstract**

A mobile terminal comprises means for receiving broadcast schedule information relating to a broadcast programme, an input (130,151) for receiving user commands; a display (151); and a controller (180) for generating a programme guide (D50, D150, D410) on the display from the broadcast schedule information when an external input indicating a schedule generation is detected, and to generate a broadcast schedule of a specific programme when the specific programme is selected from the programme guide. The mobile terminal may add a desired programme on a programme guide to a personal schedule, thus to enable frequent checking of the broadcast schedule of the desired broadcast programme. Also, in broadcast receiving mode as well as in the general mode, it is possible to add a desired broadcast programme to a personal schedule chart and to add the desired programme to the personal schedule even by a manual search, so as to facilitate the checking of periodic broadcast programmes such as soap operas or remaining broadcast schedule of series.

## Description

### BACKGROUND

The present invention relates to a mobile terminal, to a schedule managing apparatus and method in a mobile terminal and to software for use in a mobile terminal.

Mobile terminals may support various functions, for example, data and voice communications, capturing images or videos, recording audio data, reproducing music files via a sound output system, displaying images or video and the like. Some mobile terminals may include additional functions for user entertainment (such as playing video games), and other mobile terminals may support multimedia playback functions. More recently, mobile terminals have been produced which can receive broadcast or multicast signals, to allow viewing of video or television programmes.

Considerable effort has been expended to support or enhance various functions of mobile terminals. Such effort includes not only changes and improvements of structural components of the mobile terminal, but also software and hardware improvements.

Ongoing effort is being conducted to standardize and commercialize digital audio broadcasting technologies. Examples of such digital audio broadcasting technologies include Digital Audio Broadcasting (DAB) in Europe (where Eureka-147 has been adopted as the DAB standard), Digital Audio Radio (DAR) in the United States, Digital Radio Broadcasting (DRB) in Canada, Digital Sound Broadcasting (DSB) in the International Telecommunication Union (ITU-R), and Digital Multimedia Broadcasting (DMB) in Korea (which is supported by the Korean Ministry of Information and Communication (MIC)).

These digital audio broadcasting techniques that are being standardized and commercialized have been developed for the so-called next generation broadcast technologies, and are sufficiently robust to operate properly even in an environment with high levels of noise and signal interference, such as in urban downtown areas.

Therefore, even if signal transmissions are performed at a low output level, signals carrying audio data with CD level quality can be received in a vehicle that is moving at high speed. Further, the concept of audio (or radio) broadcasting has been expanded from merely providing audible data to providing audible and visual data. As such, in addition to music broadcasting, a variety of multimedia data, such as news reports, weather and traffic information, geographic and location information, video information, and the like, can be transmitted via broadcast signals.

As radio broadcasting becomes digitized, the so-called DMB (namely, the digital broadcasting standard in Korea) technology provides CD level sound quality, which surpasses the sound quality of existing AM and FM radio broadcasts, and also provides various data services (including text, graphics, video, etc.) at a data transmission rate of about 1.5 Mbit/sec. Also, as one type of next generation broadcasting technology, DMB further supports bi-directional services (that allow user interactions), improved signal quality for mobile communications, and the like.

In the prior art, a mobile terminal receiving a digital multimedia broadcast must enter a mode for receiving broadcast signals in order to allow the user to interact (i.e., view, reserve, edit, etc.) with the schedules of programmes to be broadcast. The broadcast programme guides or channel information detected from broadcast schedule information (e.g., Electronic Service Guide (ESG)) need to be checked separately for each broadcast programme, which is thus inconvenient and time consuming for the user.

### SUMMARY

According to the present invention, a mobile terminal having a so-called scheduler (comprising hardware, software, or a combination thereof) allows the user to check and manage one or more broadcast schedules of various broadcast programmes, as well as to check and manage a user's personal schedule. A memory (or other storage means) may be adapted to store additional broadcast information (i.e. information in addition to the broadcast programme) and a programme guide, and a controller adapted to display the programme guide stored in the memory when an external input indicating schedule generation is detected, and adapted to generate a broadcast schedule of a specific programme when it is selected from the programme guide.

Thus, according to one aspect, the present invention provides a mobile terminal comprising:
means for receiving broadcast schedule information relating to a broadcast programme;
an input for receiving user commands;
a display;
a controller for generating a programme guide on the display from the broadcast information, and for controlling the input and the display; and
storage means operable to store the broadcast information and the programme guide, characterized in that the controller is operable to generate a broadcast schedule of a specific programme on the display when the specific programme is selected by a user command.

Here, the controller may detect information associated with the selected programme based upon the broadcast schedule information stored in the memory, and applied the detected information into the broadcast schedule.

According to another aspect of the present invention, a schedule managing method in a mobile terminal includes: displaying a programme guide when a scheduler is driven responsive to an external input; detecting information relating to a specific programme from broadcast schedule information when the specific programme is selected from the programme guide; and inputting the information relating to the specific programme in the scheduler to generate a broadcast schedule of the programme.

In a further aspect of this invention, a schedule managing method in a mobile terminal includes: displaying a search window (or other user input means) when a scheduler is activated in response to an external input; receiving a keyword (e.g., a search term, phrase, text, etc.) entered via the search window to search for a related broadcast programme; and inputting information about the detected broadcast programme in the scheduler to generate a broadcast schedule of the programme.

Here, the searching step may include a search for the broadcast programme relating to the keyword based upon the broadcast schedule information.

In another aspect of this invention, a schedule managing method in a mobile terminal includes: displaying a programme guide (or other user selectable menu) after converting the mobile terminal operation into a broadcast mode; detecting information related to a specific broadcast programme based upon broadcast schedule information when the specific broadcast programme is selected from the programme guide and a scheduler is activated; and inputting information related to the specific broadcast programme into the scheduler to generate a broadcast schedule of the programme.

According to yet another aspect the invention provides a user interface of a mobile terminal comprising:
a first set of screen images that show a programme guide menu that allows a user to choose at least one particular broadcast programme; and
a second set of screen images that show a personalized broadcast schedule including the at least one particular broadcast programme selected from the programme guide menu. Items of the personalized broadcast schedule may be notified to the user in at least one of a visual manner, an audible manner, and a tactile manner.

The foregoing and other features, aspects and advantages of this invention will become more apparent from the following detailed description taken in conjunction with the accompanying drawings.

### BRIEF DESCRIPTION OF THE DRAWINGS

Figure 1 is a block diagram illustrating a mobile terminal according to one exemplary embodiment.
Figure 2 is a perspective view of a front side of the mobile terminal according to the exemplary embodiment.
Figure 3 is a rear view of the mobile terminal illustrated in Figure 2.
Figure 4 is a block diagram illustrating a wireless communication system operable with the mobile terminal.
Figure 5 is a flowchart illustrating an exemplary method for inputting a broadcast schedule in accordance with one exemplary embodiment.
Figure 6 shows an exemplary process of generating the broadcast schedule in accordance with the embodiment of Figure 5.
Figure 7 is a view of a list of preferred broadcast programmes.
Figure 8 is a flowchart illustrating a method for inputting a broadcast schedule in accordance with another embodiment.
Figure 9 is a flowchart illustrating a method for inputting a broadcast schedule in accordance with another embodiment.
Figure 10 is an exemplary view illustrating a process of generating a broadcast schedule in accordance with the another embodiment of Figure 9.
Figure 11 is a view of a list of preferred broadcast programmes.
Figure 12 is an exemplary view of setting a schedule in a programme guide.
Figure 13 is an exemplary view of setting a schedule during broadcasting.
Figure 14 is a view illustrating an itinerary (calendar) for schedule management.
Figure 15 is a view illustrating a process of setting an alarm for a broadcast schedule in accordance with one embodiment.

### DETAILED DESCRIPTION

Exemplary embodiments of a mobile terminal according to the present invention will be described with reference to the accompanying drawings.

A mobile terminal may refer to different types of electronic devices. Examples of such terminals include mobile phones, smart phones, notebook computers, digital broadcast terminals, personal digital assistants (PDA), portable multimedia players (PMP), navigators and the like.

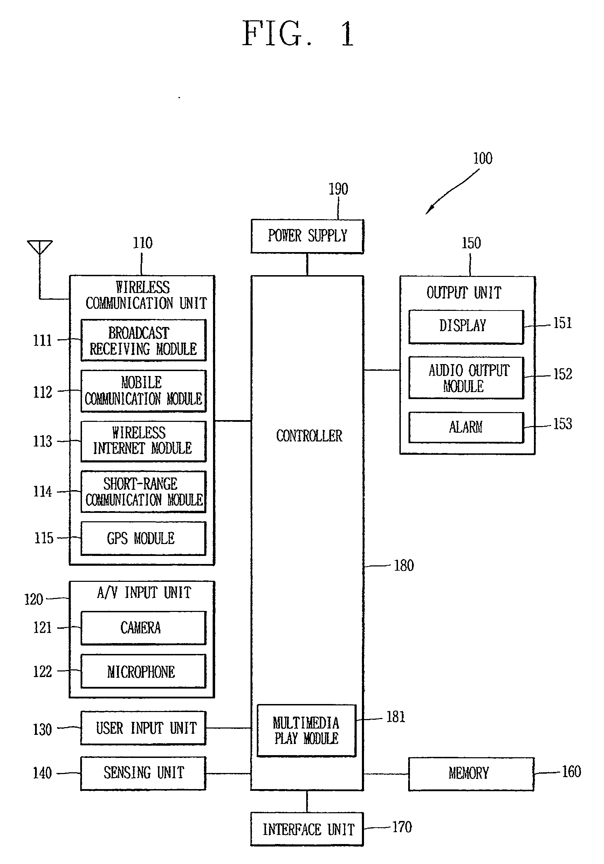

Fig. 1 is a block diagram illustrating a mobile terminal according to one embodiment. A mobile terminal of the present invention will now be described from its functional perspective with reference to Fig. 1.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like.

Fig. 1 shows a mobile terminal 100 having various components, but it is understood that implementing all of the illustrated components is not a requirement. Greater or fewer components may be substituted or alternatively used. Hereinafter, each component will be described in sequence.

The wireless communication unit 110 may typically include one or more components which permit wireless communication between the mobile terminal 100 and a wireless communication system or network within which the mobile terminal is located. For example, the wireless communication unit 110 may include at least one of a broadcast receiving module 111, a mobile communication module 112, a wireless Internet module 113, a short-range communication module 114 and a position location module 115. Here, such modules may be implemented as hardware, software, or some combination thereof.

The broadcast receiving module 111 receives broadcast signals and/or broadcast associated information from a network entity (such as a broadcast managing entity) via a broadcast channel.

The broadcast channel may include a satellite channel and a terrestrial channel. The broadcast managing entity may be a (network) server which generates and transmits broadcast signals and/or broadcast associated information or a (network) server which receives pre-generated broadcast signals and/or broadcast associated information and sends them to the mobile terminal.

Examples of broadcast associated information (i.e. information related to certain characteristics of the broadcast signals) may include information associated with a broadcast channel, a broadcast programme, a broadcast service provider, and the like. The broadcast signal may be implemented in the form of a TV broadcast signal, a radio broadcast signal, and a data broadcast signal, among others. The broadcast signal may further include a data broadcast signal combined with a TV or radio broadcast signal.

The broadcast associated information may be provided via a mobile communication network, and received by the mobile communication module 112. The broadcast associated information may be implemented in various formats. For instance, the broadcast associated information may be related to the Electronic Programme Guide (EPG) for Digital Multimedia Broadcasting (DMB), the Electronic Service Guide (ESG) for Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting - Terrestrial (DMB-T), Digital Multimedia Broadcasting - Satellite (DMB-S), Media Forward Link Only (MediaFLO^{™}), Digital Video Broadcast - Handheld (DVB-H), Integrated Services Digital Broadcast - Terrestrial (ISDB-T), and the like. The broadcast receiving module 111 may be configured to be suitable for every broadcast system that transmits broadcast signals, as well as digital broadcasting systems. Broadcast signals and/or broadcast associated information received via the broadcast receiving module 111 may be stored in a suitable medium, such as a memory 160.

The mobile communication module 112 transmits/receives wireless signals to/from at least one of network entities (e.g., base station, an external mobile terminal, a server, etc.) on a mobile communication network. Here, the wireless signals may include audio call signals, video call signals, or various formats of data according to transmission and/or reception of text and/or multimedia messages.

The wireless Internet module 113 supports Internet access (or other types of wireless network access) for the mobile terminal. This module may be internally or externally coupled to the mobile terminal.

The short-range communication module 114 denotes a module that supports short-range communications related to various technologies such as Bluetooth^{™}, Radio Frequency IDentification (RFID), Infrared Data Association (IrDA), Ultra-WideBand (UWB), ZigBee, and the like.

The position location module 115 denotes a module for detecting or calculating a position (or geographic location) of a mobile terminal. An example of the position location module 115 may include a Global Position System (GPS) module. The GPS module may receive position information in cooperation with a plurality of satellites. Here, the position information may include coordinate information represented by latitude and longitude values. For example, the GPS module can measure accurate time and distance respectively using three or more satellites so as to accurately calculate a current position of the mobile terminal based on such three different distances according to a triangulation procedure. A scheme may be used to obtain time information and distance information from three satellites and perform error correction using one satellite. Specifically, the GPS module can further obtain three-dimensional speed information, accurate time information, as well as latitude, longitude and altitude values by using the position information received from the satellites.

The A/V input unit 120 is configured to receive audio and video data that are input by the user into the mobile terminal. The A/V input unit 120 may include a camera 121 (or other type of image capture device) and a microphone 122 (or other type of sound pick-up device). The camera 121 receives and processes image frames of still pictures or video data obtained by image sensors in a video call mode or in a capturing mode. The processed image frames may be displayed on a display 151 (or other type of visual output device).

The image frames processed by the camera 121 may be stored in the memory 160 or transmitted to another device or location via the wireless communication unit 110. Two or more cameras 121 may be provided according to the configuration of the mobile terminal.

The microphone 122 may detect sounds (audio data) via a sound pick-up device while the mobile terminal is in a particular mode, such as a phone call mode, a recording mode, a voice recognition mode, and the like. This audio data is processed into digital data, which is then converted for output into a format transmittable to a mobile communication base station (or other network access point or node) via the mobile communication module 112 in case of the phone call mode. The microphone 122 may include various types of noise cancellation algorithms (or software) to remove noise or other audible signal interference detected during sound pick up.

The user input unit 130 may detect commands or instructions entered by the user and generates input data that is used to control certain operations and functions of the mobile terminal. The user input unit 130 may include a keypad (or other layout having alphanumeric buttons), dome switches (or other actuators), a touch pad (or other touch sensitive element that detects changes in static pressure, capacitance, etc. due to user touch inputs), a jog wheel (or other circular element that may be manipulated in clockwise and counter-clockwise directions by the user), a jog switch (or other element that may be manipulated back-and-forth by the user), and the like.

Various types of touch sensitive technologies may be supported. Detection of the user's finger(s), a stylus, or other object(s) placed in direct contact with the screen can be performed. Also, so-called proximity detection may be employed, whereby the user's finger(s) or object is detected when place near the screen without having to contact with the screen itself. Also, the touch pad (or other touch sensitive membrane) may be combined onto the display 151 to thus form a so-called touch screen, which allows for both user inputs via touching and provides visual outputs.

The sensing unit 140 (or other type of detector) provides status measurements regarding various aspects of the mobile terminal. For instance, the sensing unit 140 may detect an opened or closed state of the mobile terminal 100, any changes in the location (or orientation) of the mobile terminal 100, the presence or absence of user contact with the mobile terminal 100, acceleration and/or deceleration of the mobile terminal that is being held by the user, and the like. Upon such sensing or detection, a sensing signal is generated for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device (i.e., detecting any wired or wireless connections being made with other electronic components or devices), and the like.

The interface unit 170 (or other connection terminal(s) or port(s)) is generally implemented to allow attachment (i.e., wired or wireless connection) of the mobile terminal to another (external) device. The interface unit 170 may include, wired or wireless headset ports, external charger ports, wired or wireless data ports, memory card ports, ports for coupling devices having an identification module, etc., audio input-output (I/O) ports, video I/O ports, earphone ports, and the like.

The identification module may be configured as a chip for storing various items of information required to authenticate the proper use of the mobile terminal 100, which may include a User Identity Module (UIM), a Subscriber Identity Module (SIM), a Universal Subscriber Identity Module (USIM), and the like. Also, a device that includes the identification module (hereinafter, referred to as 'identification device') may be implemented in the form of a so-called smart card (or other card-like element). Hence, the identification device can be coupled to the mobile terminal 100 via a port or other connector.

Such interface unit 170 may be used to receive data from an external device, to transfer data or power to components within the mobile terminal 100, or to transfer data from the mobile terminal 100 to an external device.

The output unit 150 is configured to output various types of signals, such as audio signals, video signals and notification (alarm) signals. The output unit 150 may include a display 151, an audio output module 152, an alarm 153, and the like. Thus, the output unit 150 may provide outputs in at least one of a visual manner, an audible manner, and a tactile manner.

The display 151 may output information processed in the mobile terminal 100. For example, when the mobile terminal is operating in a phone call mode, the display 151 will provide a User Interface (UI) or a Graphic User Interface (GUI) which includes information associated with the call. As another example, if the mobile terminal is in a video call mode or an image capture mode, the display 151 may additionally or alternatively display the captured or received images together with the UI or GUI.

Meanwhile, a touch screen can be configured as the display 151 and the touchpad are layered with each other to work in cooperation with each other. This configuration permits the display 151 to function both as an input device and an output device. The display 151 may be implemented using, for example, a Liquid Crystal Display (LCD), a Thin Film Transistor-Liquid Crystal Display (TFT-LCD), an Organic Light-Emitting Diode (OLED), a flexible display, a three-dimensional (3D) display or the like. The mobile terminal 100 may include two or more of such displays according to its embodiment. For example, the mobile terminal 100 may have an external display (that can always be viewed) and an internal display (that can be viewed when the mobile terminal is opened).

The audio output module 152 may receive audio data via the wireless communication unit 110 in various modes including call-receiving mode, call-placing mode, recording mode, voice recognition mode, broadcast reception mode, and the like, or may receive audio data stored in the memory 160. Also, the audio output module 152 may output audio signals (i.e., sounds) relating to a particular function (e.g., call received, message received, etc.) performed in the mobile terminal 100. The audio output module 152 may be implemented using a speaker, a buzzer, or the like.

The alarm 153 may output a signal to inform the user about the generation of an event associated with the mobile terminal 100. Typical events may include call reception, message reception, user input reception, and the like. In addition to generating audio or video signals, the alarm 153 may also inform the user about the event generation in different ways, for example, by providing tactile sensations (e.g., vibration) to the user. The alarm 153 may also be configured to vibrate in response to the mobile terminal receiving a call or message. As another example, vibration is provided by the alarm 153 in response to receiving user inputs at the mobile terminal, thus providing a tactile feedback mechanism. Such vibrations can also be provided to make the user recognize the event generation. Additionally, the signal informing about the event generation may be output via the display 151 or the audio output module 152.

The memory 160 may store a software program (with algorithms, routines, codes, instructions, etc.) for the processing and control of the controller 180. Alternatively, the memory 160 may temporarily store input and output data (e.g., phonebook data, messages, still images, video and the like).

The memory 160 may be implemented by using any type of suitable storage medium including a flash memory, a hard disk, a micro-type multimedia card, a memory card type (e.g., SD or DX memory), Random Access Memory (RAM), Static Random Access Memory (SRAM), Read-Only Memory (ROM), Erasable Read-Only Memory (EPROM), Electrically Erasable Programmable Read-Only Memory (EEPROM), Programmable Read-Only Memory (PROM), magnetic memory, magnetic disk, optical disk, and the like. Also, the mobile terminal 100 may cooperate with a network entity, such as a web storage, which performs the storage function of the memory 160 via the Internet.

The controller 180 typically controls the overall operations of the mobile terminal. For example, the controller 180 may perform the control and processing associated with voice calls, data communications, video calls, and the like. The controller 180 may include a multimedia module 181 which supports multimedia playback functions. The multimedia module 181 may be configured as part of the controller 180 or as a separate component.

The power supply 190 may be operable to provide power required by various components under the control of the controller 180 when in use. The provided power may be internal power (i.e., a battery), external power (i.e., a power supply cord), or combination thereof.

Various embodiments described herein may be implemented in a computer-readable medium using, for example, computer software, hardware, or some combination thereof.

For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments are implemented by controller 180.

For software implementation, the embodiments such as procedures and functions may be implemented together with separate software modules each of which performs certain functions and operations. The software codes can be implemented with a software application written in any suitable programming language. Also, the software codes may be stored in the memory 160 and executed by the controller 180 (or other processor).

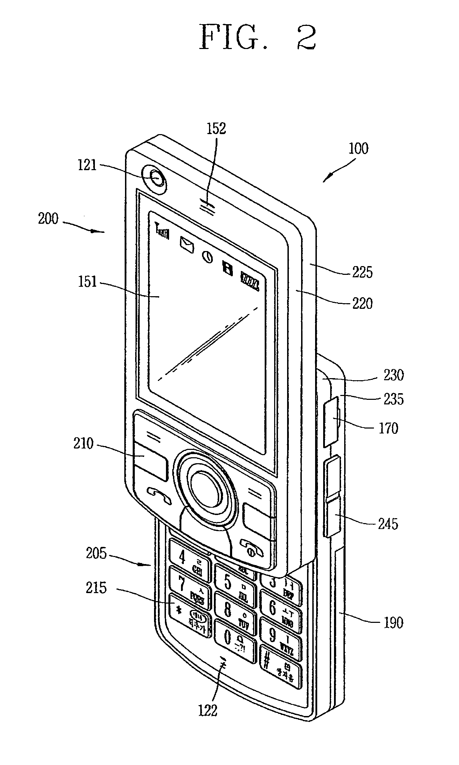

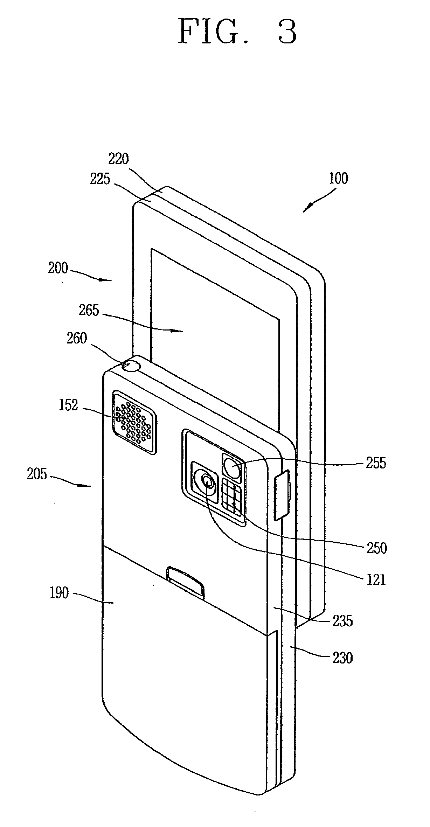

As mentioned above, the internal components of the mobile terminal according to the present invention have been described from the perspective of their functions. Hereinafter, external components of the mobile terminal related to the present invention will be described from the perspective of their functions with reference to Figs. 2 and 3.

The mobile terminal may be implemented in a variety of different configurations. Examples of such configurations include folder-type, slide-type, bar-type, rotational-type, swing-type or the like. For the sake of explanation, further disclosure will primarily relate to a slide-type mobile terminal. However, the present invention is not limited to the slide-type mobile terminal, but can be applied to many other types of terminals.

Fig. 2 is a perspective view of a front side of a mobile terminal in accordance with one embodiment.

The mobile terminal 100 may comprise a first body 200, and a second body 205 configured to slidably cooperate with the first body 200 in at least one direction. For a folder-type mobile terminal, the mobile terminal 100 may include a first body and a second body being hinge-connected together to allow folding or unfolding with respect to each other.

The first body 200 may be positioned over the second body 205 in a manner that the second body 205 is obscured by the first body 200. This state can be referred to as a closed configuration (or position, state, etc.). As illustrated in Fig. 2, the state where the first body 200 exposes at least part of the second body 205 can be referred to as an open configuration (or position, state, etc.).

The mobile terminal may be operable in a standby mode when in the closed position, but this mode can be released by the user's manipulation. Also, the mobile terminal may typically be operable in an active (phone call) mode. Here, this mode may be changed according to the user's manipulation or after lapse of a certain time period.

A case (housing, casing, cover, etc.) forming the outside of the first body 200 is formed by a first front case 220 and a first rear case 225. Various electronic components may be disposed in a space between the first front case 220 and the first rear case 225. One or more intermediate cases may additionally be disposed between the first front case 220 and the first rear case 225.

The cases can be formed of resin in a manner of injection molding, or formed using metallic materials such as stainless steel (STS) or titanium (Ti).

A display 151, an audio output module 152, a camera 121 or a first user input unit 210 may be disposed at the first front case 220 of the first body 200. The display 151 may include a liquid crystal display (LCD), organic light emitting diode (OLED), and the like, which can visibly display information. The display 151 and a touchpad can be layered with each other such that the display 151 can be configured to function as a touch screen so as to allow a user to input information in a touching manner. The audio output module 152 may be implemented as a speaker. The camera 121 may be implemented to be suitable for a user to capture still images or video.

Like the first body 200, a case configuring the outside of the second body 205 may be formed by a second front case 230 and a second rear case 235.

The second user input unit 215 may be disposed at the second body 205, in detail, at a front face of the second front case 230.

A third user input unit 245, a microphone 122 and an interface unit 170 may be disposed at either the second front case 230 or the second rear case 235.

The first to third user input units 210, 215 and 245 may be referred to as a user input unit 130. Any tactile device that allows the user to touch and manipulate various key, buttons, etc. can be employed for the user input unit 130.

For example, the user input unit 130 can be implemented as dome switches or a touch pad by which the user inputs information in a pushing, pressing or touching manner, or implemented by using mechanical elements, such as a moveable wheel (or disk), a jog or a joystick, rotatable keys, and the like.

Regarding each function, the first user input unit 210 may be used for entering (inputting) commands such as start, end, scroll or the like, and the second user input unit 215 may be used for entering (inputting) numbers, characters, symbols, or the like. Also, the third user input unit 245 can be operated as a so-called hot key function for activating a specific function of the mobile terminal. In particular, the present invention provides a hot key function for outputting a screen for a currently broadcast programme in a regular mode, by one key input. The hot key function may be implemented in the first to third user input units 210, 215 and 245.

The microphone 122 may be implemented to be suitable for receiving the user's voice or various other sounds.

The interface unit 170 may be used as a passage through which the terminal related to the present invention can exchange data or the like with an external device. For example, the interface unit 170 may be implemented as a wired or wireless connection port for connecting an earphone to the mobile terminal, a port for short-range communications (e.g., an Infrared Data Association (IrDA) port, a Bluetooth^{™} port, a wireless LAN port, etc.), power supply ports for providing power to the external device, or the like.

The interface unit 170 can be a card socket for receiving an external card, such as a Subscriber Identity Module (SIM), a User Identity Module (UIM), a memory card for storing information, or the like.

A power supply 190 may be disposed at a side of the second rear case 235 to provide power to the mobile terminal. The power supply 190 may be a rechargeable battery, for example, to be attachable/detachable for charging.

Fig. 3 is a rear view of the mobile terminal according to the embodiment of the present invention.

As illustrated in Fig. 3, a camera 121 may additionally be disposed at a rear face of the second rear case 235 of the second body 205. The camera 121 of the second body 205 faces a direction which is opposite to a direction faced by the camera 121 of the first body 200, and may support different operations from those of the camera 121 of the first body 200.

For example, the camera 121 of the first body 200 may operate with relatively few pixels (lower resolution). Thus, the camera 121 of the first body 200 may be useful when a user wishes to capture his face and send it to another party during a video call or the like. On the other hand, the camera 121 of the second body 205 may operate with a relatively large number of pixels (higher resolution) such that it can be used by a user to obtain higher quality pictures for later use.

A flash 250 and a mirror 255 may additionally be disposed adjacent to the camera 121 of the second body 205. The flash 250 operates in conjunction with the camera 121 of the second body 250 when taking a picture using the camera 121 of the second body 205. The mirror 255 can cooperate with the camera 121 of the second body 205 to allow a user to photograph himself in a self-portrait mode.

The second rear case 235 may further include an audio output module 152. The audio output module 152 of the second body 205 can cooperate with the audio output module 152 of the first body 200 to provide stereo output. Also, the audio output module 152 may be configured to operate as a speakerphone.

A broadcast signal receiving antenna 260 may be disposed at or attached to the second rear case 235, in addition to a mobile communications antenna. The antenna 260 can be configured to retract into the second body 205.

One part of a slide module 265 which allows the first body 200 to be slidably coupled to the second body 205 may be disposed at the first rear case 225 of the first body 200. The other part of the slide module 265 may be disposed at the second front case 230 of the second body 205, such that it is not exposed as illustrated in the drawing of the present invention.

Although the camera 121 is disposed at the second body 205, the present invention is not limited to such configuration. For example, it is also possible that one or more components (e.g., 260, 121∼250, 152 etc.), which have been described as being implemented on the second rear case 235, such as the camera 121, can alternatively be implemented on the first body 200, particularly, on the first rear case 225. In this configuration, the component(s) disposed on the first rear case 225 can be protected by the second body 205 in a closed position of the mobile terminal. In addition, if there is no camera at the second body 205, the camera 121 of the first body 200 can be implemented to be rotatable or otherwise movable in order to capture images from various directions.

The mobile terminal 100 of Figs. 1 through 3 may be configured to operate within a communication system which transmits data via frames or packets, including both wireless and wireline communication systems, and satellite-based communication systems.

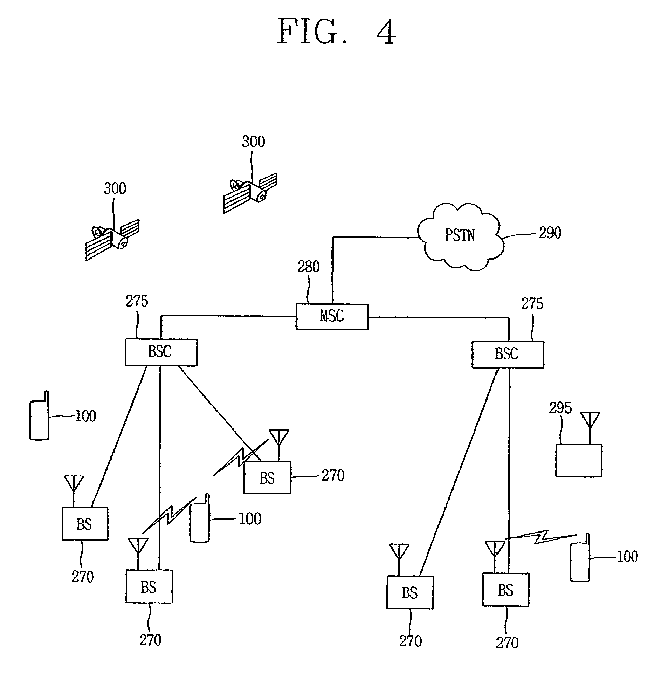

Hereinafter, a communication system in which the mobile terminal related to the present invention can operate will be described with reference to Fig. 4.

Such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like. As a nonlimiting example, the description hereafter relates to a CDMA communication system, but such teachings apply equally to other types of systems including a CDMA wireless communication system.

Referring now to Fig. 4, a CDMA wireless communication system is shown to have a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in Fig. 4.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of a sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in Fig. 4, transmits a broadcast signal to mobile terminals 100 operating within the system. The broadcast receiving module 111 (Fig. 1) is typically configured to receive broadcast signals transmitted by the BT 295.

Fig. 4 further depicts several Global Positioning System (GPS) satellites 300. Such satellites 300 facilitate locating the position of at least one of plural mobile terminals 100. Two satellites are depicted in Fig. 4, but it is understood that useful position information may be obtained with a different number of satellites. The GPS module 115 (Fig. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, some embodiments of the present invention will be described with reference to the accompanying drawings.

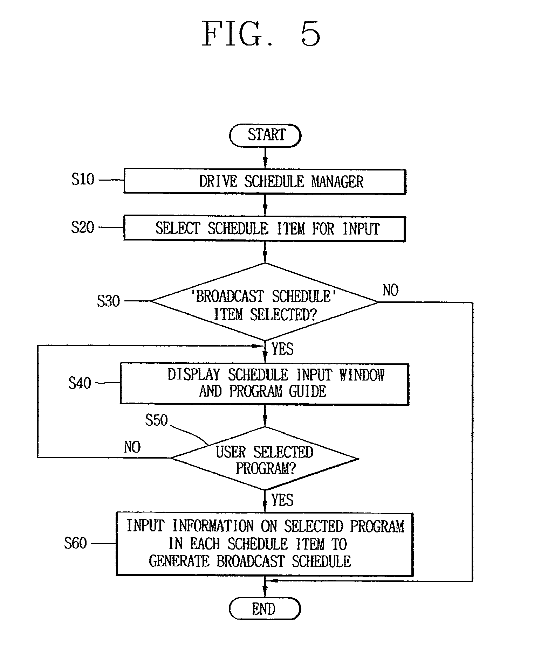

Fig. 5 is a flowchart illustrating an exemplary method for inputting a broadcast schedule in accordance with one embodiment of the present invention.

A schedule management according to one embodiment of the present invention will be described in detail with reference to Fig. 5 as follows.

Schedule management is a typical function provided in most mobile terminals. An inputting manner (or editing manner) or a user interface of the schedule management function may be somewhat different depending on the mobile terminal manufacturer or mobile terminal model.

Many different conditions should be considered in order to manage a broadcast schedule (or reserved viewing) of broadcast programmes using a scheduler, unlike a general scheduler only for managing a user's personal schedule.

That is, methods for setting schedules for broadcast programmes may be classified into a method for setting schedules using a scheduler as described for embodiment 1, a method for setting schedules using a programme guide as described for embodiment 2 ,and a method for setting schedules while viewing a broadcast programme as described for embodiment 3.

### Setup at Scheduler

First, a case of setting schedules using a scheduler (hereinafter, referred to as a 'scheduler manager'), namely, a case of setting schedules for broadcast programmes in a general mode (i.e., regular or normal mode) will now be described.

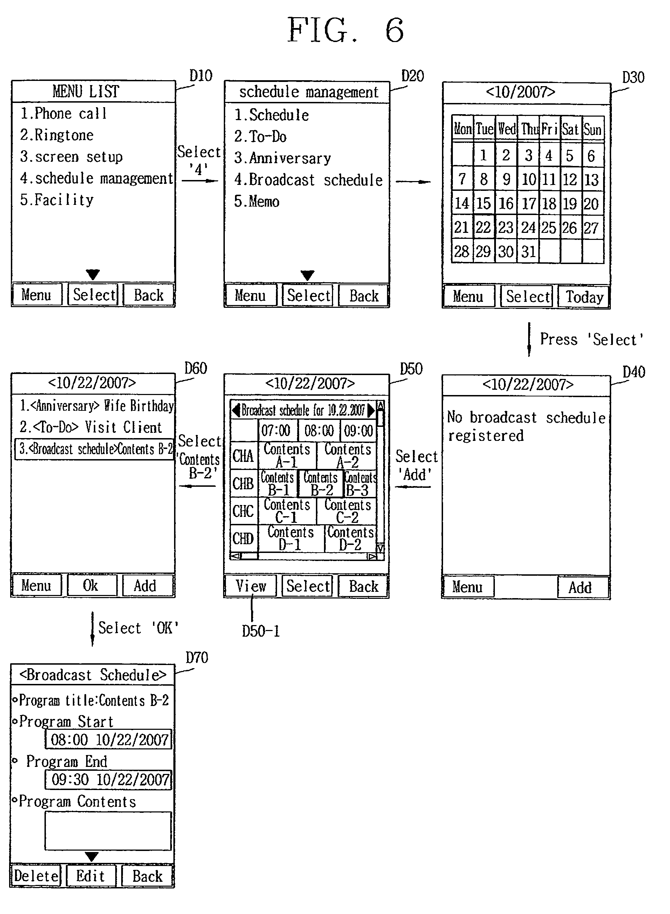

Fig. 6 is an exemplary view illustrating a process of generating the broadcast schedule in accordance with the embodiment of Fig. 5.

When an external command (e.g., a user command) for executing a schedule management menu is input through an input unit (e.g., a user input unit 130 or a display 151), the input command is forwarded to a controller 180. The controller 180 controls the schedule manager (S10) and outputs a schedule management item list D20 (or some other menu) on the display 151 as shown in Fig. 6.

Afterwards, if a user selects 'broadcast schedule' (or 'telecasting schedule') (S20), the controller 180 displays a schedule input window D30. In order to input a date for schedules, calendars may be used or such dates may directly be input. Fig. 6 shows a method of inputting a date using a calendar, but a method of directly inputting a date (Month/Day/Year) and time on a schedule edit screen may also be employed.

Once a particular date (10/22/2007) is selected on a calendar, the display 151 outputs a certain schedule edit window D40.

When the user enters an instruction 'ADD' for a broadcast schedule' (S30), the controller 180 displays a programme guide (or a programme log) on the edit window, as illustrated in a screen D50 of Fig. 6 (S40). The programme guide, which is generated in relation to broadcast schedule information (e.g., ESG information), is a time table (or a programme log) for programmes to be broadcast on the selected date (e.g., 2007/10/22). A programme guide provided in a broadcast mode is preferably used as a programme guide required for the generation of broadcast schedule of the present invention.

When the programme guide is displayed on the edit window D50, the user can select one of the broadcast programmes in the programme schedule by various means of selection, such as manipulating navigation keys, touch screen inputs or proximity touch inputs (in case the display 151 is implemented as a touch screen), voice commands, and the like.

When the user selects a specific programme (e.g., Contents B-2) from the programme guide and the user's input (i.e., pressing 'Select') according to the selection is received (S50), then the controller 180 generates a new broadcast schedule on the schedule edit window of Fig. 6 (D60). The controller 180 then inputs various information items(e.g., title, starting time, ending time, programme related contents and the like) related to the corresponding programme based upon the broadcast schedule information (e.g., ESG information) in each item of a broadcasting scheduling screen (D70). From the user's perspective, the broadcast schedule is automatically generated when the user selects his desired programme.

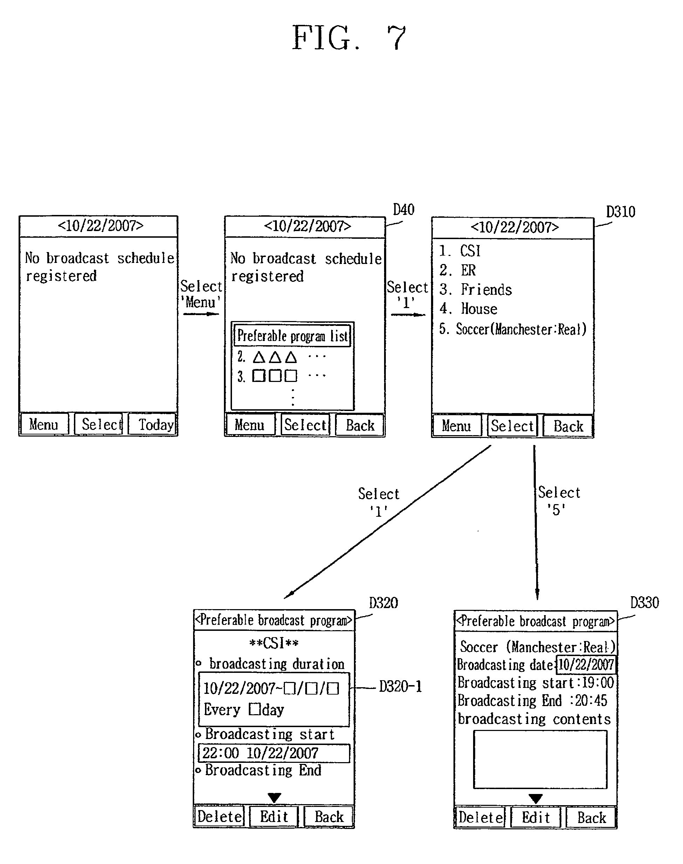

Upon user selection of the programme at the step S50, the controller 180 outputs a message for asking the user whether to register the selected programme in a preferred broadcast programme list. After the user registers the selected programme, the controller 180 manages the programme as one of the preferred broadcast programmes. Fig. 7 illustrates a preferred broadcast programme list.

Every time the broadcast schedule information of the mobile terminal is updated, the controller 180 compares the updated information with programme related information registered in the list, and applies the contents changed to the pre-generated broadcast schedule.

Thus, whenever the broadcast schedule information is updated, such updated information is applied to the broadcast schedule, so as to maintain new data in the scheduler.

A so-called "soft key" D50-1 (i.e., an graphic icon displayed on the screen that is capable of being selected by the user) may be provided at the lower portion of the screen D50 for allowing a user to view the selected programme in a schedule editing mode. Such soft keys may be adapted to support a so-called "hot key" function that enables activation of certain functions in a more convenient manner. Upon sensing an input of the soft key D50-1, the controller 180 converts the mobile terminal operation mode into a broadcast mode, and receives broadcast data of the corresponding programme so as to output on a screen.

Optional items to be input upon the schedule generation, for example, whether an alarm (alert) has been generated, an alarm time, a type of alarm (e.g., vibration, light, bell sound, etc.), a number of repetitions of the alarm, how often the alarm should be output, and the like, are set as default values. The user may edit such optional items after the generation of the broadcast schedule.

If the programme selected by the user is a periodically broadcast programme, for example, a weekly TV show (e.g., a programme broadcast on every Monday) such as a drama or soap opera, a broadcast duration of the corresponding programme is set.

The controller 180 detects the information relateing to the duration, for which the corresponding programme is broadcast, based upon the broadcast schedule information (e.g., ESG information or the like), thereby setting the broadcast duration. If the broadcast schedule information (e.g., ESG information or the like) does not include such a broadcast duration of the corresponding programme, the controller 180 sets a default value (e.g., one month) for the broadcast duration.

The broadcast duration can optionally be edited (modified) by the user. During the broadcast duration, the controller 180 may perform an alarm according to the alarm related setup information for the broadcast schedule.

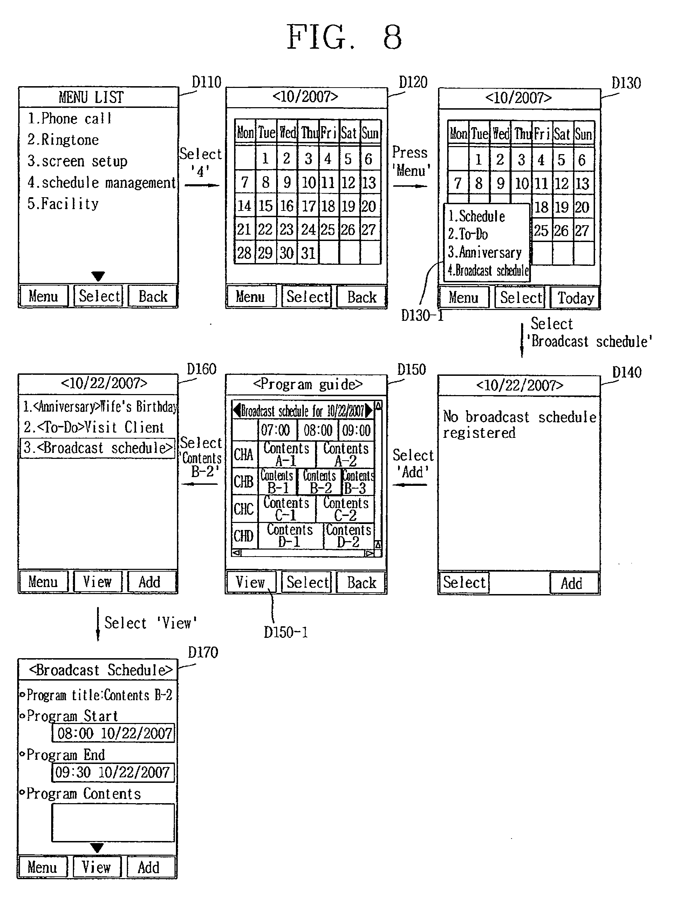

As another embodiment of Fig. 6, Fig. 8 illustrates that a schedule item may be selected using a separate pop-up window (or other type of screen image). The embodiment of Fig. 8 does not display a list of schedule items (e.g., itinerary, tasks to do, celebration date, broadcast schedule and the like) on the edit window. Upon the input of a certain soft key (e.g., 'menu item'), a pop-up window D130-1 having the schedule item list appears and allows the user to select a desired item, namely, the 'broadcast schedule' item.

The mobile terminal according to the present invention may be provided with a separate menu (or option) for setting a broadcasting system. When making a broadcast schedule, the user can set a currently receivable digital broadcasting system (e.g., DMB-T, DMB-S, MediaFLO, DVB-H, ISDB-T, etc.) through the broadcasting system setting menu.

### Broadcast programme title input → Manual Search

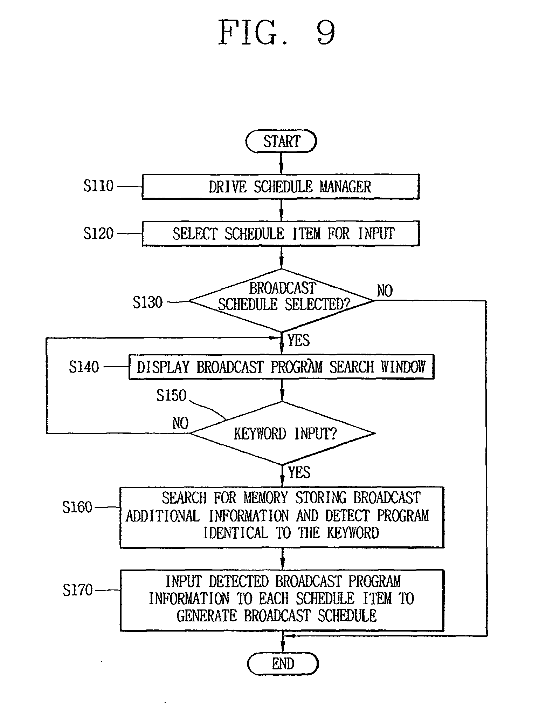

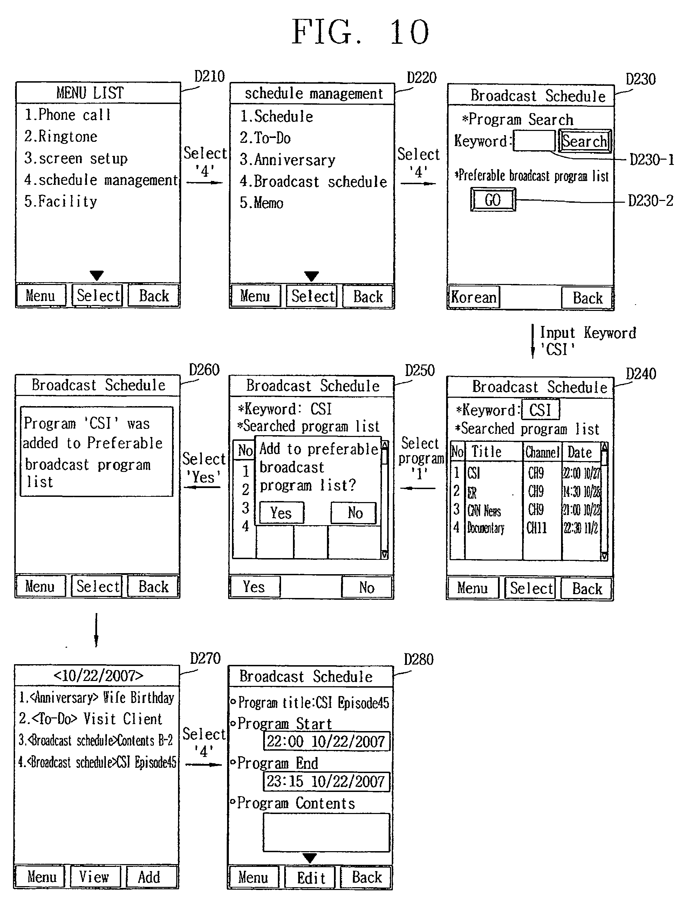

Fig. 9 is a flowchart illustrating a method for inputting a broadcast schedule in accordance with another embodiment of the present invention, and Fig. 10 is an exemplary view illustrating a process of generating a broadcast schedule according to the embodiment of Fig. 9.

With reference to Figs. 9 and 10, a process of inputting a broadcast schedule in a manual searching manner will be described.

When a schedule manager is driven according to an external input (e.g., user input) and a 'broadcast schedule' item is selected (S110 ∼ S130), the display 151 outputs a programme search window D230-1 as illustrated on a display screen D230 of Fig. 10 (S140).

When a title (e.g., 'CSI') of a broadcast programme desiring to search for is entered on the searching window D230-1 (S150), the controller 180 searches for a memory 130 storing broadcast schedule information (e.g., ESG information or the like) to detect the same or relating programme to the title (e.g., 'CSI') of the programme (S160). The detected programme(s) is (are) then displayed.

If a plurality of programmes are detected at the step S160, the user may select one of the programmes. The controller 180 then inputs various information (e.g., starting time, ending time, programme relating contents, and the like) related to the selected programme in each item on the broadcast schedule screen D280 so as to generate a new broadcast schedule (S170).

When the user selects a programme at the step S160, the controller 180 outputs a message to ask the user whether to register the selected programme in a list of preferred broadcast programmes D250.

Once the user registers the selected programme, the controller 180 manages the programme as one of the preferred broadcast programmes.

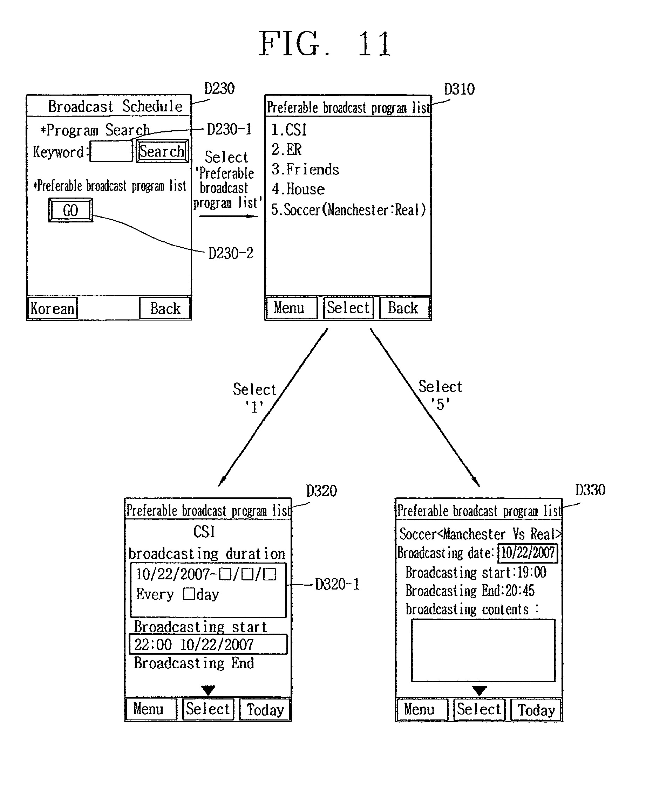

Fig. 11 illustrates an exemplary preferred broadcast programme list. Upon selecting an item 'preferred broadcast programme list' on the display screen D230, the controller 180 outputs a list of programmes which the user has designated as his preferred broadcast programmes (D310).

Optional items to be input upon the schedule generation, for example, whether an alarm (alert) has been generated, an alarm time, a type of alarm (e.g., vibration, light, bell sound, etc.), a number of repetition of an alarm, a frequency of generating an alarm and the like, may be set as default values. The user may arbitrarily adjust such optional items desiring to change after the generation of the broadcast schedule. Even for other items input, the user can edit them optionally.

If the programme selected by the user is a periodically broadcast programme, for example, a weekly broadcast programme, the controller 180 may additionally display a broadcast duration D320-1 on the broadcast schedule of the corresponding programme, as illustrated in the screen D320 of Fig. 11, based upon the broadcast schedule information (e.g., ESG information or the like).

The controller 180 detects information relating to the duration, for which the corresponding programme is broadcast, based upon the broadcast schedule information (e.g., ESG information or the like), thereby setting the broadcast duration (D320-1). The set broadcast duration may be changed by the user. If the broadcast schedule information (e.g., ESG information or the like) does not include such broadcast duration of the corresponding programme, the controller 180 sets a default value (e.g., one month) for the broadcast duration.

During the broadcast duration, the controller 180 periodically (e.g., at a designated time every Monday) performs an alarm according to the alarm related information set in the broadcast schedule.

### Setup of Schedule using Programme Guide

This embodiment relates to adding a broadcast programme to a user schedule in a broadcast mode.

Upon detecting an external input (e.g., user input) for executing a broadcast mode through an input unit (e.g., the user input unit 130 or the display151), then the controller 180 converts the mobile terminal into the broadcast mode and waits for an additional external input.

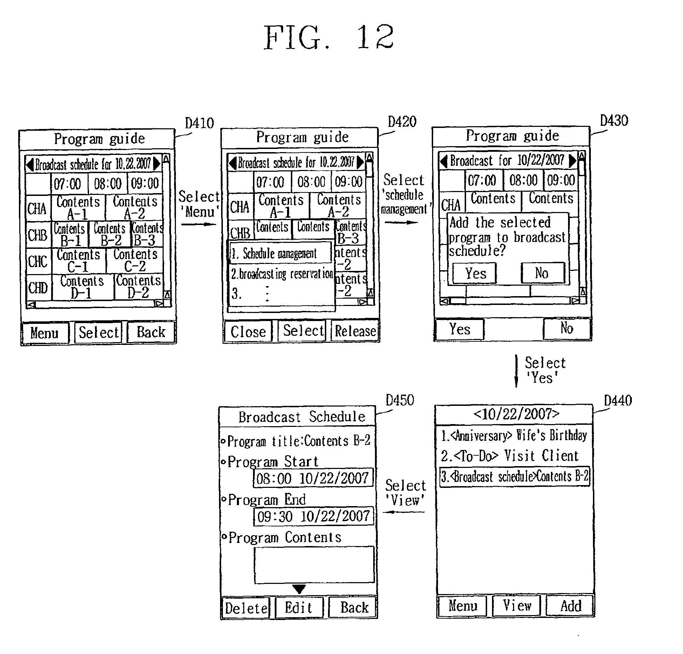

Fig. 12 illustrates an embodiment of setting a schedule in a programme guide.

Once the mobile terminal is converted into the broadcast mode, the controller 180 displays a broadcast guide (or channel time table) according to the user input as illustrated in Fig. 12.

The mobile terminal according to the present invention employs a 'schedule' function on a 'menu' list of the broadcast guide executing screen D410. When a user selects a specific programme (e.g., 'Contents B-2') from the broadcast guide in the broadcast mode and executes the 'schedule' function, then the controller 180 inputs various information (e.g., starting time, ending time, programme related contents and the like) relating to the programme (e.g., 'Contents B-2') in each item of the broadcast schedule screen (D450), thereby generating a new broadcast schedule (D440).

### Setup of Schedule when Broadcast is being watched

This embodiment relates to adding a current broadcast programme into a user schedule while watching the corresponding broadcast programme.

Once the mobile terminal is converted into the broadcast receiving mode and a channel to be broadcast is selected according to the user input, a broadcast stream of the channel received through an antenna is decoded via a decoding unit to be outputd to the display 151.

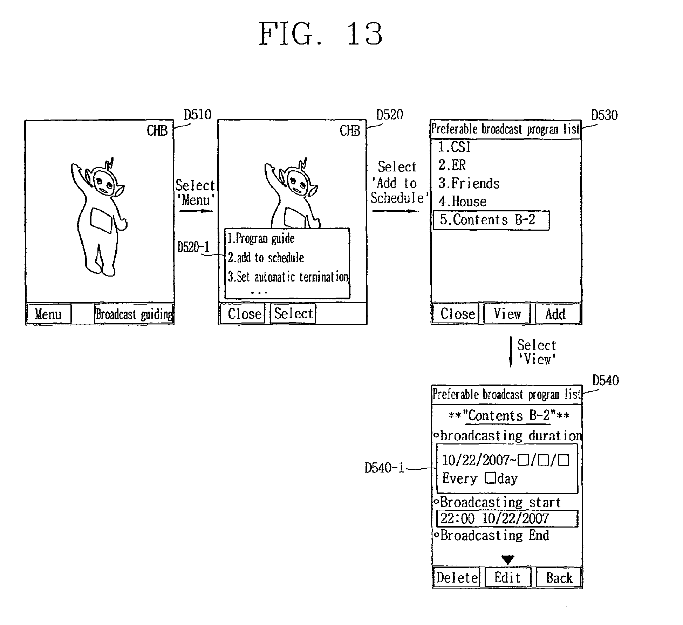

Fig. 13 illustrates an embodiment of setting a schedule when a broadcast programme is being watched.

As illustrated in a screen D520 of Fig. 13, if the user enters a menu key while watching a broadcast programme, the controller 180 senses this to display a menu window D520-1.

Then, if the user selects a function (e.g., a function of 'add to schedule') on the menu window D520-1 in order to add the currently watched broadcast programme to a schedule ('broadcast schedule'), the controller 180 asks the user whether to register the currently watched broadcast programme (e.g., 'Contents B-2') to a list of preferred broadcast programmes, and outputs the preferred broadcast programme list (D530).

At the same time, the controller 180 inputs various information items (e.g., start time, end time, programme related contents and the like) related to the programme (e.g., 'Contents B-2') in each item of preferred broadcast programme setup information (D540), thereby generating a new broadcast schedule for the programme (e.g., 'Contents B-2').

For example, if it is assumed that the programme (e.g., 'Contents B-2') is scheduled to be broadcast for a broadcast duration (D540-1) of two months (8 weeks) and is broadcast every Monday and Tuesday, the controller 180 performs the alarm for the programme every Monday and Tuesday for 8 weeks.

The preferred broadcast programme setup information (D540) is optionally changeable by the user, and the controller 180 reflects the changed contents in the broadcast schedule of the corresponding programme.

When the user wants to add the currently watched programme to the schedule, the corresponding programme may possibly be a broadcast programme which is periodically broadcast (e.g., every day, every week or every month), other than a one-off broadcast programme.

If the programme it is desired to add to the schedule ('broadcast schedule') is already registered in the preferred broadcast programme list or set in the broadcast schedule, then the controller 180 notifies the user of this.

### Schedule Check

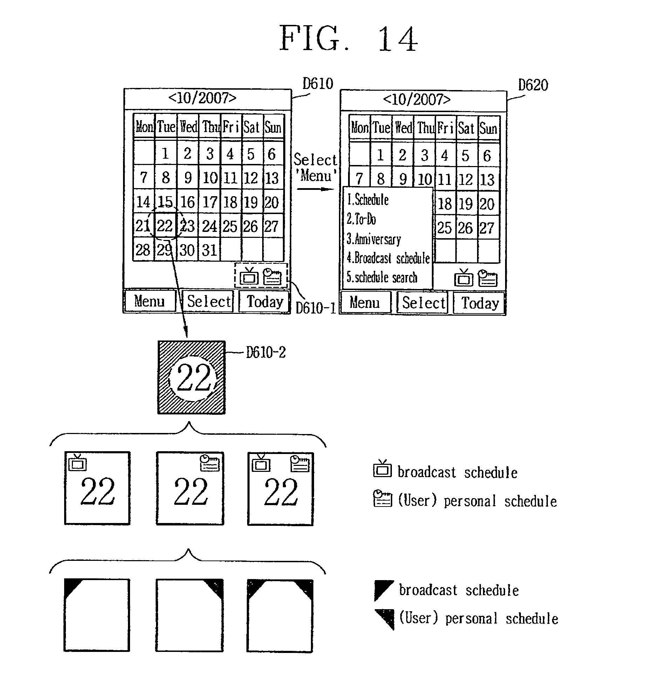

Fig. 14 illustrates an itinerary (calendar) of a schedule management according to the present invention.

As illustrated in Fig. 14, the mobile terminal according to the present invention displays an icon on a date D610-1 of the itinerary (calendar) or on a blank D610-2 of the calendar so as to facilitate recognition as to whether the broadcast schedule has been registered.

Preferably, the mobile terminal according to the present invention changes font types or font colors to facilitate recognition as to whether the broadcast schedule has been registered.

Preferably, the mobile terminal according to the present invention is configured to open a pop-up window indicating whether the broadcast schedule has been registered when a cursor (or a selection bar) of the calendar moves.

Preferably, the mobile terminal according to the present invention is provided with a broadcast schedule searching function on a menu window D620-1 such that the user can search for a specific broadcast programme or a schedule on the calendar.

### Schedule alarm Method

A schedule alarm method according to the present invention is described as follows.

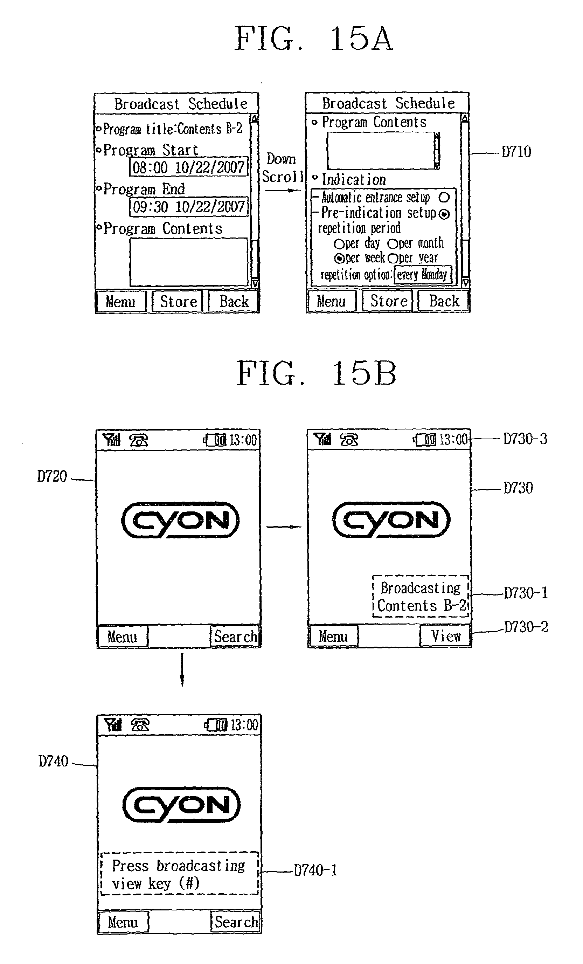

Fig. 15 illustrates a method for setting an alarm for a broadcast schedule in accordance with one embodiment of the present invention.

At the start time of a programme (e.g., "Contents B-2") set in the broadcast schedule to a user, the controller 180 indicates the start of the programme Contents B-2 according to a preset alarm method (e.g., 'automatic entrance, 'pre-indication' or the like).

In case where the alarm for the broadcast schedule is set to the 'automatic entrance', the controller 180 converts the mobile terminal into the broadcast mode when the programme Contents B-2 starts and outputs the programme Contents B-2 on the display 151. The controller 180 opens a pop-up window to acquire a user's permission before outputting the programme Contents B-2.

In the case where the alarm for the broadcast schedule is set to 'pre-indication', the controller 180 outputs a pop-up window, bell sound, vibration, light or the like to inform the user of the start of the programme Contents B-2 at a certain time (e.g., ○○hour(s) or ○○minute(s)) before the programme Contents B-2 starts, to allow the user to recognize the start of the programme Contents B-2.

When the programme Contents B-2 starts, the controller 180 determines whether the mobile terminal is currently performing another operation (e.g., composing a message, placing a call, reproducing a music file (MP3), accessing an Internet or the like). If the mobile terminal is performing another operation, then the controller 180 performs at least one of alarm functions of, for example, opening a pop-up window, generating bell sound, vibration, light or the like, to notify the user of the start of the programme Contents B-2.

Even if the user has missed the start of the programme Contents B-2 for some reason, the controller 180 displays a message (or icon) D730-1 indicating that the programme Contents B-2 is currently being broadcast at one side of the idle screen as illustrated in Fig. 15(B) until before the end of the programme Content B-2. For using an icon instead of the message D730-1, the corresponding icon is preferably displayed on an indication area D730-3.

The present invention provides a hot key for outputting a screen for a current broadcast programme Contents B-2 in a general mode, by one key input. The hot key may be implemented in software or hardware.

A soft key D730-2 of a screen D730 illustrated in Fig. 15 is a hot key in a software. The soft key D730-2 serves as the hot key on the screen D730. Upon sensing an input of the soft key D730-2, the controller 180 converts the mobile terminal into the broadcast mode, and outputs a screen for the current broadcast programme Contents B-2.

A screen D740 is another example of the screen D730.

When a message D740-1 appears on one side of the idle screen as illustrated on the screen D740, the controller 180 considers a key (e.g., #) designated in the message D740-1 as a hot key for a broadcast watching, regardless of its original function. When an input of the key '#' is sensed under the condition of the screen D740, the controller 180 converts the mobile terminal into the broadcast mode to output the screen for the current broadcast programme Contents B-2.

A schedule management method according to each embodiment of the present invention can be implemented as computer-readable codes in a program-recorded medium. The computer-readable medium may include all types of recording devices each storing data readable by a computer system.

Examples of such computer-readable media may include ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the mobile terminal.

As described above, the mobile terminal according to the present invention adds a desired programme to a programme guide in a personal scheduling chart (calendar), thus to enable a frequent checking of the schedule of the desired broadcast programme. Also, in a broadcast receiving mode as well as in a general mode, it is allowed to add the desired broadcast programme to the personal scheduling chart and to add the desired broadcast programme to the personal scheduling chart even by means of a manual search, so as to facilitate the checking of periodically broadcast programmes such as soap operas or of remaining broadcast schedule of series.

The features described herein provide for a mobile terminal comprising a memory adapted to store broadcast schedule information and a programme guide, and a controller adapted to display the programme guide stored in the memory when an external input indicating a schedule generation is detected, and to generate a broadcast schedule of a specific programme when the specific programme is selected

The controller may be adapted to detect information relating to the selected programme based upon the broadcast schedule information stored in the memory, and to input the detected information in the broadcast schedule. Also, the controller may be adapted to manage the selected programme as one of preferred broadcast programmes when the specific programme is selected from the programme guide. Here, whenever the broadcast schedule information is updated, the controller may apply the updated information to the broadcast schedule of programmes registered in a list of the preferred broadcast programmes. Also, the controller may be adapted to perform at least one of the alarm functions including a pop-up window, bell sound, vibration and light according to an alarm method set for the broadcast schedule at the time of broadcasting the programme in the generated broadcast schedule.

The features described herein provide for a schedule management method of a mobile terminal comprising the steps of allowing a user to select a specific broadcast programme when a scheduler is activated, and providing a broadcast schedule related to the specific broadcast programme to the user via the scheduler.

The allowing step may comprise displaying a programme guide when a scheduler is operated responsive to an external input, and the providing step comprises detecting information related to the specific broadcast programme based on broadcast schedule information when the specific broadcast programme is selected from the programme guide, and generating a broadcast schedule in the scheduler using the information related to the specific broadcast programme.

The detecting step of the programme related information may include registering the specific programme as a preferred programme when the specific programme is selected from the programme guide. The detecting step of the programme related information may further include applying updated broadcast schedule information to the broadcast schedules for programmes registered in a list of the preferred broadcast programmes whenever the broadcast schedule information is updated.

The method may further comprise performing a user notification function in at least one of a visual manner, an audible manner, and a tactile manner according to a notification method set for the broadcast schedule at the time of broadcasting the programme set in the generated broadcast schedule.

The allowing step may involve displaying a search window when the scheduler is operated in response to the external input, receiving text inputs via the search window and searching for a broadcast programme related to the text input, and the providing step may comprise inputting information related to the broadcast programme into the scheduler to generate the broadcast schedule.

The searching step may include searching for the broadcast programme related to the text input based upon broadcast schedule information.

The allowing step may comprise converting the mobile terminal into a broadcast receiving mode in response to an external input and displaying a programme guide, and the providing step may comprise detecting information related to a specific broadcast programme based upon broadcast schedule information when the specific broadcast programme is selected from the programme guide and a scheduler is operated, and inputting the information related to the broadcast programme in the scheduler to generate a broadcast schedule.

The features described herein provide for user interface of a mobile terminal comprising a first set of screen images that show a programme guide menu that allows a user to choose at least one particular broadcast programme, and a second set of screen images that show a personalized broadcast schedule including the at least one particular broadcast programme selected from the programme guide menu. Items of the personalized broadcast schedule are notified to the user in at least one of a visual manner, an audible manner, and a tactile manner.

## Claims

1. A mobile terminal (100) comprising:
a broadcast receiver (111) configured to receive broadcast programme information related to available broadcast programmes;
a storage means (160) configured to store user-schedule information and the received broadcast programme information; and
a controller (180) configured to update the stored user-schedule information to include a broadcast schedule (D70, D170, D280, D450) corresponding to a broadcast programme selected from the available broadcast programmes included in the broadcast program information.

2. A mobile terminal according to claim 1, further comprising:
a display (151) configured to display the available broadcast programmes included in the broadcast programme information, and an input unit (130, 151) configured to allow a user to select the broadcast programme from the displayed available broadcast programmes, or
a display configured to display a current broadcast programme, and an input unit configured to allow a user to input a command requesting the controller to update the user-schedule information to include the currently displayed broadcast programme.

3. A mobile terminal according to claim 1 or claim 2, wherein the received broadcast programme information comprises a programme guide (D50, D150, D410) including at least starting times of the available broadcast programmes, and
wherein the broadcast schedule included in the user-schedule information includes at least a starting time of the selected broadcast programme, and further includes at least one of an ending time, a title, and additional contents related to the selected broadcast programme.

4. A mobile terminal according to claim 3, wherein the controller is further configured to control the display to display a calendar upon receiving a schedule management request, and to display the programme guide including available broadcast programs for a particular date selected on the displayed calendar, and
wherein the selected broadcast programme corresponds to a broadcast programme selected from the broadcast programmes on the particular date selected.

5. A mobile terminal according to claim 1, further comprising:
a display configured to display a keyword search window; and
an input unit configured to allow a user to input a keyword in the keyword search window,
wherein the controller is further configured to search the stored broadcast programme information for any broadcast programmes that include the input keyword, and to control the display to display said any broadcast programmes that include the input keyword, and
wherein the selected broadcast programme corresponds to a broadcast programme selected from the displayed said any broadcast programmes that include the input keyword.

6. A mobile terminal according to claim 1, wherein the broadcast schedule is integrated with the user-scheduled information, and
wherein the selected broadcast programme corresponds to a user-preferred broadcast programme included in a list of user-preferred broadcast programmes stored in the memory.

7. A mobile terminal according to any one of claims 1 to 6, wherein the controller is further configured to output an alarm or notification in at least one of a visual manner, an audible manner, and a tactile manner to notify that the selected broadcast program is about to be broadcast.

8. A schedule management method provided by a mobile terminal, the method comprising the steps of:
receiving broadcast programme information related to available broadcast programmes;
storing user-schedule information and the received broadcast programme information; and
updating the stored user-schedule information to include a broadcast schedule (D70, D170, D280, D450) corresponding to a broadcast programme selected from the available broadcast programmes included in the broadcast program information.

9. A method according to claim 8, further comprising:
displaying the available broadcast programmes included in the broadcast programme information, and allowing a user to select the broadcast programme from the displayed available broadcast programmes, or
displaying a current broadcast programme, and allowing a user to input a command to update the user-schedule information to include the currently displayed broadcast programme.

10. A method according to claim 9, wherein the received broadcast programme information comprises a programme guide (D50, D150, D410) including at least starting times of the available broadcast programmes, and
wherein the broadcast schedule included in the user-schedule information includes at least a starting time of the selected broadcast programme, and further includes at least one of an ending time, a title, and additional contents related to the selected broadcast programme.

11. A method according to claim 8, further comprising:
displaying a calendar upon receiving a schedule management request, and displaying the programme guide including available broadcast programs for a particular date selected on the displayed calendar, and
wherein the selected broadcast programme corresponds to a broadcast programme selected from the broadcast programmes on the particular date selected.

12. A method according to claim 8, further comprising:
displaying a keyword search window;
allowing a user to input a keyword in the keyword search window;
searching the stored broadcast programme information for any broadcast programmes that include the input keyword; and
displaying said any broadcast programmes that include the input keyword, and
wherein the selected broadcast programme corresponds to a broadcast programme selected from the displayed said any broadcast programmes that include the input keyword.

13. A method according to claim 8, wherein the broadcast schedule is integrated with the user-scheduled information, and
wherein the selected broadcast programme corresponds to a user-preferred broadcast programme included in a list of user-preferred broadcast programmes that is stored.

14. A method according to any one of claims 8 to 13, further comprising:
outputting an alarm or notification in at least one of a visual manner, an audible manner, and a tactile manner to notify that the selected broadcast program is about to be broadcast.

15. A carrier on which is stored a computer program comprising processor-implementable instructions for causing a computer to perform a method as claimed in any one of claims 8 to 14.
